# EUROPÄISCHE PATENTSCHRIFT

(11) **EP 3 001 797 B1**
(45) Veröffentlichungstag und Bekanntmachung des Hinweises auf die Patenterteilung: **08.05.2024**
(21) Anmeldenummer: 15718760.0
(22) Anmeldetag: 06.03.2015
(51) Int. Cl.: A23L 27/00, A21D 2/18, A21D 2/36, A21D 10/00, A21D 13/04

(54) **TEIG ZUR HERSTELLUNG EINES BACKPRODUKTS UND BACKPRODUKT**
DOUGH FOR PRODUCING A BAKED PRODUCT AND BACKED PRODUCT
PÂTE SERVANT À CONFECTIONNER UN PRODUIT DE BOULANGERIE ET PRODUIT DE BOULANGERIE

(30) Priorität: 10.03.2014 DE 102014204363
(43) Veröffentlichungstag der Anmeldung: 06.04.2016
(73) Patentinhaber: BRIU GmbH, 61462 Königstein (DE)
(72) Erfinder: ROSE, Uwe-Bernd, 61462 Königstein (DE)
(74) Vertreter: Ullrich & Naumann PartG mbB
(86) Internationale Anmeldenummer: PCT/DE2015/200127
(87) Internationale Veröffentlichungsnummer: WO 2015/135543

(56) Entgegenhaltungen:
- WO-A1-2014/026782
- WO-A1-2015/136382
- Anonymous: "Wie bekommt man extrem bitteren Geschmack bei Essen weg.", , 13 June 2009 (2009-06-13), pages 1-2, XP55706958, Retrieved from the Internet: URL:https://www.gutefrage.net/frage/wie-be kommt-man-extrem-bitteren-geschmack-bei-es sen-weg [retrieved on 2020-06-19]
- Anonymous: "Wie bekommt man extrem bitteren Geschmack bei Essen weg.", , 13 June 2009 (2009-06-13), pages 1-2, XP055706958, Retrieved from the Internet: URL:https://www.gutefrage.net/frage/wie-be kommt-man-extrem-bitteren-geschmack-bei-es sen-weg [retrieved on 2020-06-19]

## Beschreibung

Die Erfindung betrifft einen Teig zur Herstellung eines Backprodukts, der Mehl, Fett und einen Salzträger, ausgewählt aus Gemüsepulver, Gewürzpulver und/oder Käsepulver, enthält. gemäss den Ansprüchen.

Gegenstand der Erfindung ist weiter ein durch Backen dieses Teigs erhältliches salziges Backprodukt, insbesondere salzige Kekse.

Backprodukte wie Kekse sind aus der Praxis vielfach bekannt.

DE 198 30 122 A1 zeigt ein Brotrezept unter Zusatz von Topinambur, der in frischer Form als Topinambur-Gemüse, Topinambur-Sirup oder Topinambur-Schnaps zugesetzt werden soll.

DE 101 19 732 A1 zeigt einen Teig, der durch eine Kombination bestimmter Zutaten eine Versorgung mit essenziellen Aminosäuren bereitstellen soll. Topinambur ist als Zutat erwähnt.

DE 38 15 950 C2 zeigt ein Gebäck unter Verwendung von Topinambur. Es ist beschrieben, die Topinamburknolle zu dämpfen und zu einem Mus zu verarbeiten und dieses Mus mit Getreidemehl zu einem Teig zu vermischen.

US 3 497 360 offenbart ein Brot, das unter Zusatz von 5,7- 7,5 % Topinamburmehl gebacken wird.

WO 2014/026782 A1 offenbart einen Teig zur Herstellung eines Backprodukts, der Mehl (inkl. wenigstens 10% Topinamburmehl), Fett, Salz, Birnendicksaft als Geschmacksträger (mehr als 1%), Vanillezucker, Honig und Kieselgel (ca. 2%) enthält.

Die aus der Praxis bekannten Backwaren, insbesondere Kekse, sind jedoch insoweit problematisch, als es sich dabei regelmäßig um süße Backwaren handelt, die als Appetitzügler nur bedingt in Frage kommen. Aufgrund der Süße produzieren diese Backwaren nach dem Verzehr eine Insulinausschüttung im menschlichen Körper, wodurch der diätetische Charakter konterkariert wird.

Der Erfindung liegt daher die Aufgabe zugrunde, einen Teig zur Herstellung eines Backprodukts und ein Backprodukt anzugeben, welches auf Basis natürlicher Einsatzstoffe eine appetitzügelnde Wirkung aufweist, ohne die Gefahr einer ungewollten Insulinausschüttung, welches insbesondere für den Konsumenten sensorisch, visuell und vor allem geschmacklich akzeptabel und interessant ist.

Gelöst wird diese Aufgabe durch einen Teig zur Herstellung eines Backprodukts der eingangs genannten Art, wobei für den Teig wesentlich ist, dass er zur Herstellung eines salzigen Backprodukts dient. Er enthält neben Mehl, Fett und einem Salzträger, ausgewählt aus Gemüsepulver, Gewürzpulver und/oder Käsepulver, einen Mehlanteil von wenigstens 10 Gew.-% Topinamburmehl. Der Teig enthält bezogen auf seine Gesamtmasse wenigstens 1 Gew.-% des Salzträgers zur Überdeckung des Geschmacks von im Topinambur enthaltenen Cynarin. Der Teig enthält des Weiteren 0,5-5 Gew.-% Kieselgele oder Kieselerden und keinen Zucker.

Im Folgenden seien einige im Rahmen der Erfindung verwendete Begriffe erläutert:
Ein Backprodukt ist ein verzehrfertiges gebackenes Nahrungsmittel, insbesondere ein Teiggebäck wie beispielsweise Kekse oder dergleichen. Der Begriff Mehl bezeichnet jegliche für die Herstellung von Nahrungsmitteln gebräuchliche Mehle wie beispielsweise Weizen-, Roggen- oder Dinkelmehle einschließlich des erfindungsgemäßen zugesetzten Topinamburmehls.

Fette können pflanzlichen oder tierischen Ursprungs sein, beispielhaft genannt seien Pflanzenfette, Margarine, Butter und Butterfette.

Salze sind im weitesten Sinne zu verstehen, auch im Sinne von Salzersatz oder Salzträger.

Bei den Salzträgern handelt es sich um Gemüsepulver, bspw. im Konkreten in Form von Tomatenpulver, und Käsepulver.

Des Weiteren sind Gewürzpulver Salzträger, z.B. Currypulver, Paprikapulver, Kümmelpulver, Rosmarinpulver.

Wesentlich ist jedenfalls, dass kein Zucker im Teig enthalten ist, um nämlich nach dem Verzehr eine ungewollte Adrenalinausschüttung zu vermeiden.

Des Weiteren enthält der Mehlanteil wenigstens 10 Gew.-% Topinamburmehl. Von der Gesamtmenge des eingesetzten Mehls entfallen somit mindestens 10 Gew.-% auf das genannte Topinamburmehl. Die Topinambur-Pflanze enthält Inulin, das als appetitzügelnder Wirkstoff im Stand der Technik bekannt ist. Mittels des Topinamburmehls kann Inulin auf Basis eines natürlichen Rohstoffs in das Backprodukt eingebracht werden.

Die Erfindung hat erkannt, dass Topinamburmehl aufgrund des in der Topinamburpflanze enthaltenen Bitterstoffs Cynarin in das Backprodukt einen unerwünschten Bittergeschmack, der etwa einem Artischockengeschmack entspricht (Cynarin ist ebenfalls in Artischocken enthalten) einbringen kann.

Es ist daher vorgesehen, dass zusätzlich der Teig bezogen auf seine Gesamtmasse wenigstens 1 Gew.-% des Salzträgers zur Überdeckung des Geschmacks von im Topinambur enthaltenen Cynarin enthält. Im Kontext dieser Erfindung besitzt ein solcher Salzträger die Eignung, im fertigen Backprodukt den durch Cynarin hervorgerufenen unerwünschten Artischockengeschmack mindestens so weit zu überdecken, dass er vom Konsumenten nicht mehr als unangenehm empfunden wird.

Kern der Erfindung ist es somit, in ein Backprodukt das appetitzügelnde Inulin einerseits auf Basis eines natürlichen Rohstoffs (Topinamburmehl) einzubringen und andererseits die damit verbundenen nachteiligen Folgen zum einen erkannt zu haben und zum anderen durch Zusatz eines Salzträgers zu kompensieren.

Alle in Frage kommenden Salzträger besitzen die Eigenschaft, dass sie einerseits den unerwünschten, durch Cynarin hervorgerufenen Geschmacksanteil des Topinamburmehls überdecken bzw. kompensieren und zum anderen vorteilhaft zum Geschmack des Backprodukts beitragen, ganz überwiegend in Bezug auf den salzigen Geschmack. Insoweit hat der Salzträger gleich mehrere Funktionen.

In vorteilhafter Weise enthält der Mehlanteil vorzugsweise 10 bis 40 Gew.-%, weiter 15 bis 30 Gew.-%, weiter vorzugsweise 15 bis 25 Gew.-% Topinamburmehl. Es kann so eine für die appetitzügelnde Wirkung relevante Menge Inulin in das Backprodukt eingebracht werden, auf der anderen Seite wird dessen Geschmack für den Konsumenten nicht oder allenfalls in hinnehmbarer Weise beeinträchtigt.

Bezogen auf die Gesamtmasse des Teigs kann dieser 4 bis 20 Gew.-%, weiter vorzugsweise 5 bis 15 Gew.-%, weiter vorzugsweise 6 bis 12 Gew.-% Topinamburmehl enthalten.

Der Anteil des Salzträgers an der Gesamtmasse des Teigs beträgt bevorzugt 1 bis 6 Gew.-%, weiter vorzugsweise 2 bis 5 Gew.-%.

Inulin wird im Magen-Darm-Trakt der meisten Menschen nicht abgebaut. Bei etwa einem Fünftel der Menschen enthält die Darmflora jedoch Enzyme, die Inulin abbauen können. Durch diesen Abbauprozess kann es zu Blähungen kommen.

Der Teig enthält daher zusätzlich Mittel gegen Blähungen, die ausgewählt sind aus der Gruppe bestehend aus Kieselerden oder Kieselgelen. Der Teig enthält 0,5 bis 5 Gew.-%, vorzugsweise 1 bis 3 Gew.-% Kieselerden oder Kieselgele.

Als Fett sind bei einem erfindungsgemäßen Backprodukt bzw. Teig zur Herstellung desselben Pflanzenfette bevorzugt. Mehl und Fett sind i. d. R. die Hauptbestandteile des Teigs, der Anteil des Mehls an der Gesamtmasse des Teigs kann erfindungsgemäß beispielsweise 30 bis 60 Gew.-%, vor zugsweise 40 bis 50 Gew.-% betragen. Der Anteil des Fetts an der Gesamtmasse des Teigs kann beispielsweise 10 bis 30 Gew.-%, weiter vorzugsweise 15 bis 30 Gew.-%, weiter vorzugsweise 20 bis 25 Gew.-% betragen.

Wie bereits zuvor erwähnt, dient der Salzträger dazu, ein salziges Backprodukt zu schaffen, bspw. in Form eines salzigen Keks. Jedwede Art von Salzträger lässt sich verwenden, bspw. in Form von Gemüsepulver. Tomatenpulver eignet sich dabei ganz besonders.

Auch kann als Salzträger Käsepulver verwendet werden.

Ebenso lassen sich beliebige Gewürzpulver verwenden, bspw. Currypulver, Paprikapulver, Kümmelpulver, Rosmarinpulver, etc.

Der Teig kann bevorzugt andere übliche Inhaltsstoffe eines Keksteigs enthalten wie beispielsweise Eier, ggf. Milch oder geringe Mengen Salz.

Gegenstand der Erfindung ist des Weiteren ein Backprodukt, das durch Backen eines erfindungsgemäßen Teigs erhältlich ist. Es kann sich insbesondere um einen salzigen Keks handeln.

### Vergleichsbeispiel 1:

Die folgenden Inhaltsstoffe werden zu einem Teig angerührt:
Weizenmehl 320 g
Topinamburmehl 80 g
Honig 100 g
Salz oder Salzersatz vorzugsweise bis zu 10 g
Eier 2
Pflanzenfett 200 g
Milch 5 g
Kieselgel 20 g
ggf. Birnendicksaft 25 g

Aus dem so angesetzten Teig werden ungefähr 50 Kekse hergestellt und gebacken.

### Vergleichsbeispiel 2:

Der Teig des Beispiels 1 wird mit den gleichen Inhaltsstoffen angesetzt, zusätzlich werden 10 g Cacao als weiterer Geschmacksträger hinzugegeben.

### Vergleichsbeispiel 3:

Der Teig des Beispiels 1 wird mit den gleichen Inhaltsstoffen und zusätzlich 10 g Zimtpulver angesetzt.

## Patentansprüche

1. Teig zur Herstellung eines salzigen Backprodukts, der enthält
- Mehl,
- Fett,
- einen Salzträger, ausgewählt aus Gemüsepulver, Gewürzpulver und/oder Käsepulver,
wobei der Mehlanteil wenigstens 10 Gew.-% Topinamburmehl enthält, und der Teig bezogen auf seine Gesamtmasse folgendes enthält:
a. wenigstens 1 Gew.-% des Salzträgers, zur Überdeckung des Geschmacks von im Topinambur enthaltenen Cynarin,
b. 0,5-5 Gew.-% Kieselgele oder Kieselerden,
c. keinen Zucker.

2. Teig nach Anspruch 1, **dadurch gekennzeichnet, dass** das Gemüsepulver Tomatenpulver ist.

3. Teig nach Anspruch 1 oder 2, **dadurch gekennzeichnet, dass** der Mehlanteil 10 bis 40 Gew.-% vorzugsweise 15 bis 30 Gew.-%, weiter vorzugsweise 15 bis 25 Gew.-% Topinamburmehl enthält.

4. Teig nach einem der Ansprüche 1 bis 3, **dadurch gekennzeichnet, dass** er bezogen auf seine Gesamtmasse 4 bis 20 Gew.-%, vorzugsweise 5 bis 15 Gew.-%, weiter vorzugsweise 6 bis 12 Gew.-% Topinamburmehl enthält.

5. Teig nach einem der Ansprüche 1 bis 4, **dadurch gekennzeichnet, dass** er 1 bis 6 Gew.-%, vorzugsweise 2 bis 5 Gew.-% des Salzträgers enthält.

6. Teig nach einem der Ansprüche 1 bis 5, **dadurch gekennzeichnet, dass** er 1 bis 3 Gew.-% Kieselerden oder Kieselgele enthält.

7. Teig nach einem der Ansprüche 1 bis 6, **dadurch gekennzeichnet, dass** ein Gelbildner verwendet wird.

8. Teig nach einem der Ansprüche 1 bis 7, **dadurch gekennzeichnet, dass** er Pflanzenfett enthält.

9. Teig nach Anspruch 8, **dadurch gekennzeichnet, dass** gehärtetes Pflanzenfett, bspw. Kokosfett, verwendet wird.

10. Teig nach einem der Ansprüche 1 bis 9, **dadurch gekennzeichnet, dass** das Gewürzpulver Currypulver, Paprikapulver, Kümmelpulver und/oder Rosmarinpulver ist.

11. Backprodukt, erhältlich durch Backen eines Teigs nach einem der Ansprüche 1 bis 10.

12. Backprodukt nach Anspruch 11, **dadurch gekennzeichnet, dass** es ein salziges Keks ist.

## Claims

1. Dough for the production of a salty baked product, wherein the dough contains
- flour,
- fat,
- a salt carrier, selected from vegetable powder, spice powder, and/or cheese powder,
wherein the flour portion contains at least 10 wt.% Jerusalem artichoke flour, and wherein the dough contains the following based on its total mass:
a. at least 1 wt.% of the salt carrier, to cover the taste of cynarine contained in the Jerusalem artichoke,
b. 0.5-5 wt.% silica gels or silica,
c. no sugar.

2. Dough according to claim 1, **characterized in that** the vegetable powder is tomato powder.

3. Dough according to claim 1 or 2, **characterized in that** the flour portion contains 10 to 40 wt.%, preferably 15 to 30 wt.%, more preferably 15 to 25 wt.% Jerusalem artichoke flour.

4. Dough according to one of claims 1 to 3, **characterized in that** it contains 4 to 20 wt.%, preferably 5 to 15 wt.%, more preferably 6 to 12 wt.% Jerusalem artichoke flour based on its total mass.

5. Dough according to one of claims 1 to 4, **characterized in that** it contains 1 to 6 wt.%, preferably 2 to 5 wt.% of the salt carrier.

6. Dough according to one of claims 1 to 5, **characterized in that** it contains 1 to 3 wt.% silica or silica gels.

7. Dough according to one of claims 1 to 6, **characterized in that** a gelling agent is used.

8. Dough according to one of claims 1 to 7, **characterized in that** it contains vegetable fat.

9. Dough according to claim 8, **characterized in that** hardened vegetable fat, for example, coconut fat, is used.

10. Dough according to one of claims 1 to 9, **characterized in that** the spice powder is curry powder, paprika, cumin powder, and/or rosemary powder.

11. Baked product, obtainable by baking a dough according to one of claims 1 to 10.

12. Baked product according to claim 11, **characterized in that** it is a salty biscuit.

## Revendications

1. Pâte pour la fabrication d'un produit cuit salé, qui contient
- de la farine,
- de la graisse,
- un porteur de sel, sélectionné parmi des légumes en poudre, des épices en poudre et/ou du fromage en poudre,
dans laquelle la part de farine contient au moins 10 % en poids de farine de topinambour et la pâte contient ce qui suit, par rapport à sa masse totale :
a. au moins 1 % en poids de porteur de sel, pour couvrir le goût de la cynarine contenue dans le topinambour,
b. 0,5 - 5 % en poids de gels de silice ou de terres à diatomées,
c. pas de sucre.

2. Pâte selon la revendication 1, **caractérisée en ce que** les légumes en poudre sont des tomates en poudre.

3. Pâte selon la revendication 1 ou 2, **caractérisée en ce que** la part de farine contient 10 à 40 % en poids, de préférence de 15 à 30 % en poids, encore de préférence 15 à 25 % en poids de farine de topinambour.

4. Pâte selon l'une des revendications 1 à 3, **caractérisée en ce que**, par rapport à sa masse totale, elle contient 4 à 20 % en poids, de préférence 5 à 15 % en poids, encore de préférence 6 à 12 % en poids de farine de topinambour.

5. Pâte selon l'une des revendications 1 à 4, **caractérisée en ce qu'**elle contient 1 à 6 % en poids, de préférence 2 à 5 % en poids de porteur de sel.

6. Pâte selon l'une des revendications 1 à 5, **caractérisée en ce qu'**elle contient 1 à 3 % en poids de gels de silice ou de terres à diatomées.

7. Pâte selon l'une des revendications 1 à 6, **caractérisée en ce qu'**un agent gélifiant est utilisé.

8. Pâte selon l'une des revendications 1 à 7, **caractérisée en ce qu'**elle contient de la graisse végétale.

9. Pâte selon la revendication 8, **caractérisée en ce qu'**une graisse végétale durcie, par exemple de la graisse de noix de coco, est utilisée.

10. Pâte selon l'une des revendications 1 à 9, **caractérisée en ce que** les épices en poudre sont de la poudre de curry, de la poudre de paprika, de la poudre de cumin et/ou de la poudre de romarin.

11. Produit cuit, obtenu par la cuisson d'une pâte selon l'une des revendications 1 à 10.

12. Produit cuit selon la revendication 11, **caractérisé en ce qu'**il s'agit d'un biscuit salé.
